# FASCICULE DE BREVET EUROPEEN

(11) **EP 0 996 883 B1**
(45) Date de publication et mention de la délivrance du brevet: **13.11.2002**
(21) Numéro de dépôt: 98906988.5
(22) Date de dépôt: 06.02.1998
(51) Int. Cl.: G06F 3/023

(54) **PROCEDE ET DISPOSITIF DE SAISIE MANUELLE DE SYMBOLES AVEC GUIDAGE**
VERFAHREN UND SYSTEM ZUM MANUELLEN ERFASSEN VON SYMBOLEN MIT FÜHRUNG
METHOD AND DEVICE FOR MANUAL ACQUISITION OF SYMBOLS WITH GUIDANCE

(30) Priorité: 07.02.1997 FR 9701432
(43) Date de publication de la demande: 03.05.2000
(73) Titulaire: Chelly, Najib, 75018 Paris (FR)
(72) Inventeur: Chelly, Najib, 75018 Paris (FR)
(86) Numéro de dépôt international: FR9800224
(87) Numéro de publication internationale: WO98035289

(56) Documents cités:
- WO-A-88/02522
- DE-A- 3 326 538
- BORCHARDT ET AL: "MANUAL CHARACTER ENTRY DEVICE" IBM TECHNICAL DISCLOSURE BULLETIN., vol. 19, no. 6, 1 novembre 1976 (1976-11-01), pages 2187-2191, XP002045521 NEW YORK US
- "Layout of Keyboards for Data Entry" NTIS TECH NOTES.,janvier 1987 (1987-01), page 7 XP002045522 SPRINGFIELD, VA US

## Description

La présente invention se rapporte à un procédé et un dispositif de saisie manuelle de symboles avec guidage.

Elle s'applique aussi bien aux domaines de l'informatique, qu'à celui de l'audiovisuel, des télécommunications, de la bureautique et plus généralement, à tout domaine où il est utile de saisir manuellement des symboles.

Les claviers actuellement connus possèdent une multitude (généralement supérieure à 100) de touches correspondant chacune à un ou à quelques symboles. Ils sont encombrants et coûteux. Ils ne peuvent donc pas s'adapter à des applications miniatures ou portables.

Les dispositifs à écran dit tactile et à reconnaissance automatique d'écriture manuscrite sont assez peu fiables parce qu'ils ne peuvent reconnaître toutes les écritures manuscrites. Dans les applications portables, l'utilisateur ne dispose pas toujours d'un appui et ne peut donc soigner suffisamment sont écriture pour obtenir sa reconnaissance. La mise en oeuvre des logiciels qu'ils nécessitent est onéreuse et consomme des ressources de traitement et de l'énergie électrique.

Dans tous les dispositifs de saisie de caractères, un long apprentissage est nécessaire avant de pouvoir saisir un texte de quelques lignes sans effort de concentration.

La présente invention entend remédier à ces inconvénients en présentant :
- un dispositif de faible encombrement qui puisse être utilisé par tous scripteur, quelle que soient les qualités de son écriture manuscrite habituelle et
- un procédé de saisie d'usage très simple.

BORCHARDT ET AL: 'MANUAL CHARACTER ENTRY DEVICE' IBM TECHNICAL DISCLOSURE BULLETIN, vol. 19, no. 6, 1 novembre 1976 (1976-11-01), pages 2187-2191, NEW YORK (US) décrit un dispositif de saisie manuelle de symboles, comportant:
- un moyen de guidage adapté à guider le scripteur vers au moins une partie caractéristique d'une forme géométrique représentative d'une écriture de certains symboles susceptibles d'être saisis, le moyen de guidage étant formé par un ensemble de guides en relief permettant l'écriture de formes géométriques représentatives d'une écriture de certains symboles susceptibles d'être saisis, les guides délimitant des parties des dites formes géométriques,
- un moyen de sélection manuelle des dites parties adapté à émettre un signal représentatif de la sélection manuelle de chaque partie opérée par le scripteur,
- un moyen de détermination de symbole adapté à déterminer le symbole écrit par le scripteur en prenant en compte des signaux représentatifs de parties sélectionnés manuellement.

Selon son premier aspect, l'invention vise un dispositif de saisie manuelle de symboles, comportant:
- un moyen de guidage adapté à guider le scripteur vers au moins une partie caractéristique d'une forme géométrique représentative d'une écriture de certains symboles susceptibles d'être saisis, le moyen de guidage étant formé par
   un ensemble de segments de guidage formant un tracé comprenant des formes géométriques visibles représentatives d'une écriture de certains symboles susceptibles d'être saisis, les segments correspondant à des parties des dites formes géométriques,
- un moyen de sélection manuelle des dits segments adapté à émettre un signal représentatif de la sélection manuelle de chaque segment opéré par le scripteur,
- un moyen de détermination de symbole adapté à déterminer le symbole écrit par le scripteur en prenant en compte des signaux représentatifs de segments sélectionnés manuellement.

Grâce à ces dispositions, l'utilisation du dispositif de saisie est intuitive, c'est-à-dire qu'elle ne nécessite pas un long apprentissage, puisque le scripteur. qui connaît des formes géométriques de l'écriture de symboles qu'il souhaite saisir, est guidé, en fonction de l'une des ces formes, vers une partie caractéristique de ladite forme.

En outre, le dispositif de saisie peut être de très petite dimension, puisque les parties caractéristiques peuvent être juxtaposées, voire superposées, et forment une forme globale de dimensions réduites. Une dimension inférieure au centimètre carré peut par exemple être atteinte sans difficulté.

Le guidage du scripteur est purement visuel et lui permet de sélectionner très rapidement les parties caractéristiques de chaque symbole qu'il souhaite saisir.

Selon des caractéristiques particulières de la présente invention, certains segments correspondent exclusivement à un symbole et sont situés sur une partie caractéristique du chemin d'une forme géométrique représentative d'une écriture du symbole auquel ils correspondent
et le moyen de détermination est adapté à déterminer ces symboles écrits par la sélection manuelle des segments auxquels ils correspondent.

Grâce à ces dispositions, la saisie d'un symbole se fait par la sélection d'une seule partie de ce symbole, ce qui est très rapide et très simple à mettre en oeuvre.

Selon d'autres caractéristiques particulières, le moyen de détermination est adapté à déterminer lesdits symboles écrits comme étant ceux dont les segments sélectionnés manuellement sont conjointement caractéristiques d'une forme géométrique d'une écriture des dits symboles.

Grâce à ces dispositions, le scripteur n'a qu'à tracer l'ensemble du symbole, en sélectionnant toutes les parties qui lui correspondent, pour obtenir sa saisie, sans avoir à rechercher si une partie du symbole est caractéristique.

Un clavier peut être constitué conformément à l'invention et le nombre de symboles susceptibles d'être saisis est étendu.

Selon un second aspect, l'invention vise un procédé de saisie manuelle de symboles, comportant:
- une étape de guidage au cours de laquelle on guide le scripteur vers au moins une partie caractéristique d'une forme géométrique représentative d'une écriture de certains symboles susceptibles d'être saisis, utilisant un moyen de guidage formé par
   un ensemble de segments de guidage formant un tracé comprenant des formes géométriques visibles représentatives d'une écriture de certains symboles susceptibles d'être saisis, les segments correspondant à des parties des dites formes géométriques,
- une étape de détection d'une sélection manuelle de un ou plusieurs segments opérés par le scripteur,
- une étape de détermination de symbole déterminant le symbole écrit par le scripteur en fonction des segments sélectionnés.

L'invention vise aussi un téléviseur, une télécommande, un organiseur, un écran tactile, un ordinateur, un téléphone, un télécopieur, un pageur, une table, un dispositif de pointage, une souris informatique, une montre un clavier, un dispositif de traitement, de stockage, d'affichage, d'impression ou de communication d'information comportant un dispositif de saisie tel que succinctement exposé ci-dessus ou mettant en oeuvre un procédé tel que succinctement exposé ci-dessus.

Les avantages de ces autres aspects de la présente invention étant identique à ceux du dispositif succinctement exposé ci-dessus, ils ne sont pas rappelés ici.

La description qui va suivre, faite en regard des dessins annexés dans un but explicatif et nullement limitatif permettent de mieux comprendre les avantages, buts et caractéristiques de la présente invention.

La figure 1 représente un premier mode de réalisation de la présente invention, adapté aux symboles alphanumériques.

La figure 2 représente un deuxième mode de réalisation de la présente invention, adapté aux symboles alphanumériques.

La figure 3 représente un troisième mode de réalisation de la présente invention, adapté aux langues arabe et perse.

La figure 4 représente un quatrième mode de réalisation de la présente invention, adapté aux symboles alphanumériques.

La figure 5 représente un cinquième mode de réalisation de la présente invention, adapté aux symboles alphanumériques.

La figure 6 représente un dispositif de traitement associé à chaque mode de réalisation exposé en regard des figures 1 à 5.

La figure 7 représente un organigramme de fonctionnement du dispositif de traitement illustré en figure 6, adapté aux modes de réalisation présentés en regard des figures 2 à 5.

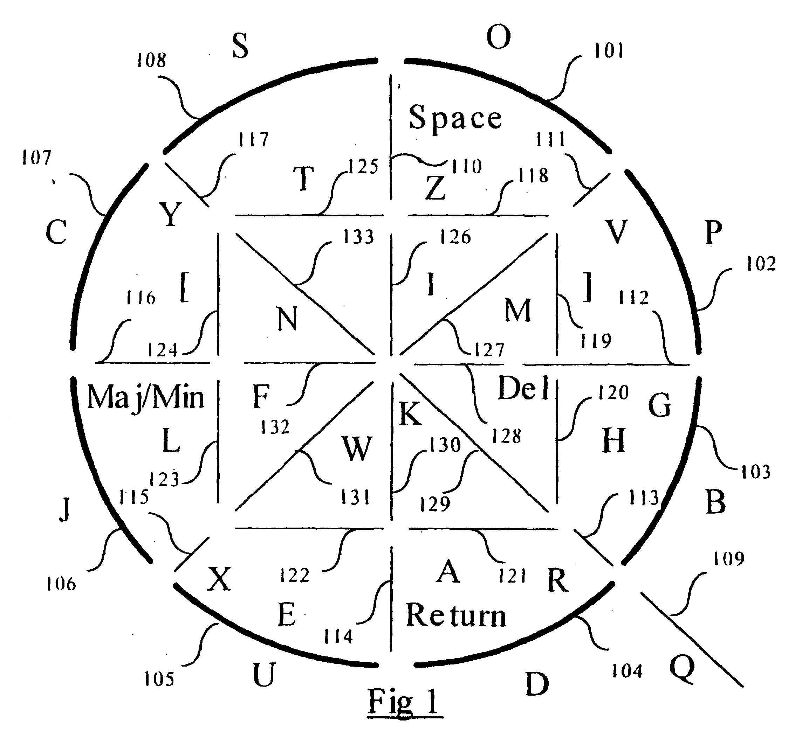

En figure 1 sont représentés, incorporé dans le premier mode de réalisation de la présente invention adapté aux symboles alphanumériques :
- huit segments périphériques 101 à 108,
- un segment radial extérieur 109,
- huit segments radiaux intermédiaires 110 à 117,
- huit segments droits de côté de carré 118 à 125 et
- huit segments radiaux internes 126 à 133.

A chacun de ces segments est associé une signification selon le tableau 1 ci-dessous :

**TABLEAU 1**

| | |
|---|---|
| 101 | O |
| 102 | P |
| 103 | B |
| 104 | D |
| 105 | U |
| 106 | J |
| 107 | C |
| 108 | S |
| 109 | Q |
| 110 | (touche " espace ") |
| 111 | V |
| 112 | G |
| 113 | R |
| 114 | (touche " entrée ") |
| 115 | X |
| 116 | (touche " majuscule/minuscule") |
| 117 | Y |
| 118 | Z |
| 119 | ] |
| 120 | H |
| 121 | A |
| 122 | E |
| 123 | L |
| 124 | [ |
| 125 | T |
| 126 | I |
| 127 | M |
| 128 | (touche " suppr ") |
| 129 | K |
| 130 | (touche " lettre/nombre ") |
| 131 | W |
| 132 | F |
| 133 | N |

On observe que, conformément à l'invention, pour les vingt six lettres de l'alphabet considéré, certains symbole associés, chacun, à un segment comportent en lettre majuscule, dans sa forme géométrique, le segment considéré. Par exemple, la lettre « Q » qui est la seule à comporter le segment oblique externe 109, est associée à ce segment.

On observe, en outre, que les lettres qui comportent traditionnellement, en majuscule, une partie courbe, sont représentées par des segments courbes, à l'exception de la lettre « G » qui se différencie de la lettre « C » principalement par son retour final vers le centre, et qui est donc associée au segment 112 et la lettre « R » qui se différencie de la lettre « P » par sa partie droite oblique et qui est, en conséquence, associé au segment 113. On observe, encore, que les lettres qui comportent, traditionnellement, en majuscule une partie oblique, sont représentés par des segments obliques, à l'exception de la lettre « Z » et « A ». Enfin, les autres lettres, qui ne comportent ni segment oblique, ni segment courbe, sont représentées par des segments droits, verticaux ou horizontaux dits «de côté de carré » 118 à 125.

Bien entendu, un clavier numérique peut aussi être constitué selon l'invention. A cet effet, le segment 130 permet de commuter le clavier entre les lettres et les chiffres.

Préférentiellement, les lettres sont marquées sur ce clavier avec des codes de couleur, par exemple pour différencier les consonnes des voyelles, les lettres des touches de fonction, et les chiffres des autres symboles.

A chaque segment correspond un capteur, adapté à émettre un signal représentant la sélection manuelle de ce segment. Chaque segment peut, par exemple, être constitué d'une touche de clavier ou d'un capteur optique, résistif, acoustique. capacitif ou de tout autre type de capteur ponctuel ou matriciel. Le chemin considéré peut aussi être affiché sur un écran tactile dont certaines zones, qui se superposent aux segments affichés sont associées aux symboles correspondant audit segment. Les différents modes de réalisation décrits ci-dessus sont connus de l'homme du métier.

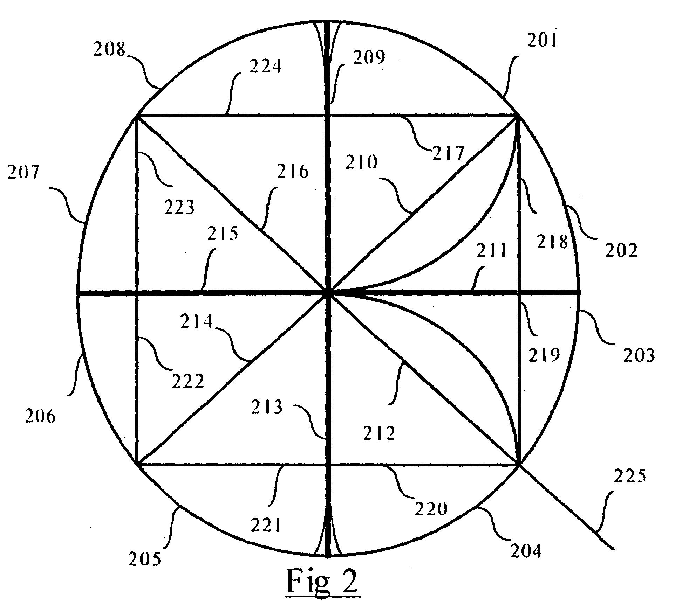

En figure 2, sont représentés :
- huit segments circulaires 201 à 208,
- huit segments radiaux 209 à 216,
- huit segments droits horizontaux ou verticaux 217 à 224 et
- un segment externe inférieur 225.

On note que les lettres latines, cyrilliques et d'autres types de symboles, lettres notamment utilisées en langues anglaise et française, par exemple, correspondent à des successions de segments, par exemple selon la tableau 2 :

**TABLEAU 2**

| | | | | | | | | | |
|---|---|---|---|---|---|---|---|---|---|
| A | 222 | 223 | 224 | 217 | 218 | 219 | 215 | 211 | |
| B | 209 | 213 | 201 | 202 | 211 | 203 | 204 | | |
| C | 208 | 207 | 206 | 205 | | | | | |
| D | 209 | 213 | 201 | 202 | 203 | 204 | | | |
| E | 223 | 222 | 224 | 215 | 211 | | | | |
| F | 223 | 222 | 224 | 215 | | | | | |
| G | 208 | 207 | 206 | 205 | 204 | 203 | 211 | | |
| H | 223 | 222 | 215 | 211 | 218 | 219 | | | |
| I | 223 | 222 | | | | | | | |
| J | 218 | 219 | 220 | | | | | | |
| K | 209 | 213 | 210 | 212 | | | | | |
| L | 223 | 222 | 211 | | | | | | |
| M | 223 | 222 | 216 | 210 | 218 | 219 | | | |
| N | 223 | 222 | 216 | 212 | 219 | 218 | | | |
| O | 201 | 202 | 203 | 204 | 205 | 206 | 207 | 208 | |
| P | 209 | 213 | 201 | 202 | 211 | | | | |
| Q | 201 | 202 | 203 | 204 | 205 | 206 | 207 | 208 | 225 |
| R | 209 | 213 | 201 | 202 | 211 | 212 | | | |
| S | 201 | 208 | 216 | 212 | 204 | 205 | | | |
| T | 209 | 213 | 224 | 217 | | | | | |
| U | 206 | 205 | 204 | 203 | | | | | |
| V | 216 | 210 | | | | | | | |
| W | 223 | 222 | 214 | 212 | 219 | 218 | | | |
| X | 216 | 212 | 210 | 214 | | | | | |
| Y | 216 | 210 | 214 | | | | | | |
| Z | 224 | 217 | 210 | 214 | 211 | 220 | | | |

En variante, l'ajout d'un segment prolongeant le segment 223 vers le haut, permet de tracer des caractères de langue sémitique.

Selon un mode de réalisation préférentiel, chaque segment représenté en figure 2 est constitué de deux parties :
- un guidage en relief qui permet de guider l'appui du doigt du scripteur ou d'une baguette telle qu'un stylet,
- une zone sensible au contact du doigt ou du stylet, comme, par exemple une zone d'un écran tactile.

Le guidage peut aussi bien être effectué par retrait de matière dans les segments considérés ou par ajout de matière entre les segments considérés.

En variante, et selon un autre mode de réalisation, chaque segment est constitué de deux parties :
- un tracé qui suit ou représente sa forme et qui guide visuellement l'appui d'un doigt ou d'une baguette et
- une zone sensible au contact du doigt ou du stylet, comme, par exemple une zone d'un écran tactile.

Le tracé peut, par exemple, être sérigraphié sur l'écran tactile ou être porté par un film souple superposé à cet écran ou encore porté par la face arrière de l'écran tactile.

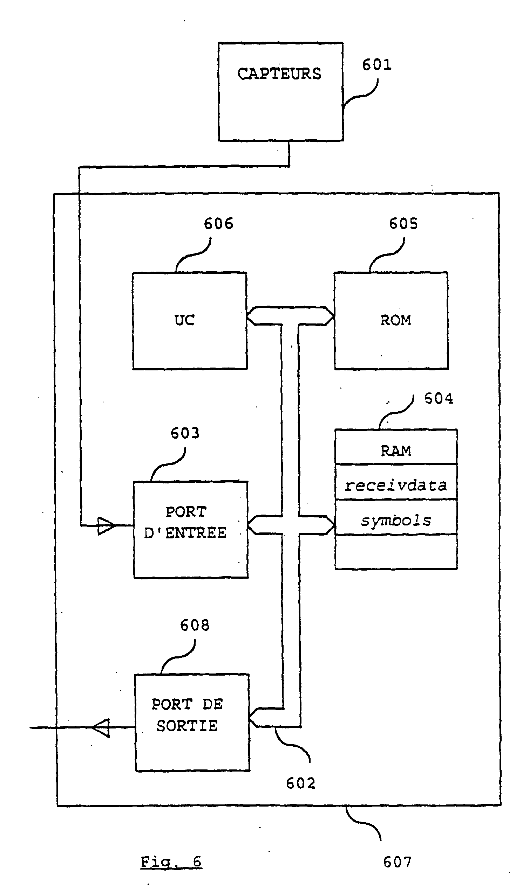

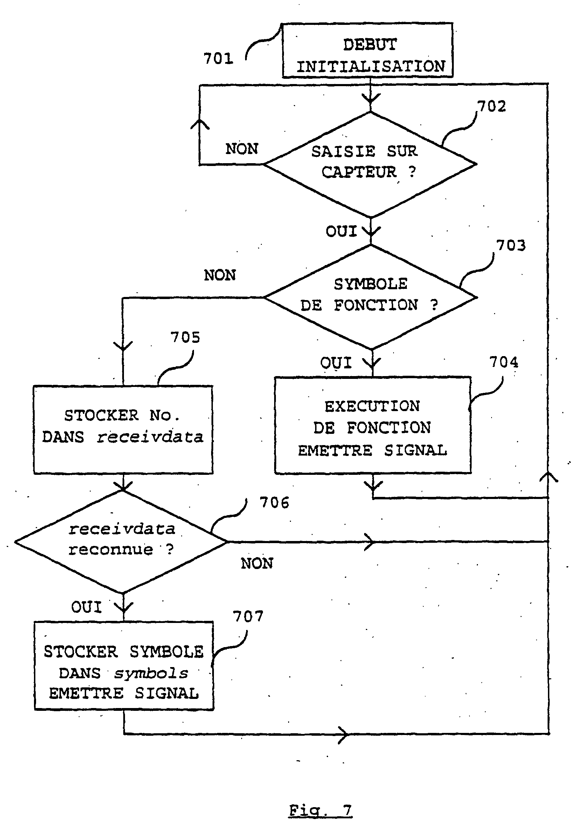

Le fonctionnement de ces différents modes de réalisation est exposé en regard des figures 6 et 7.

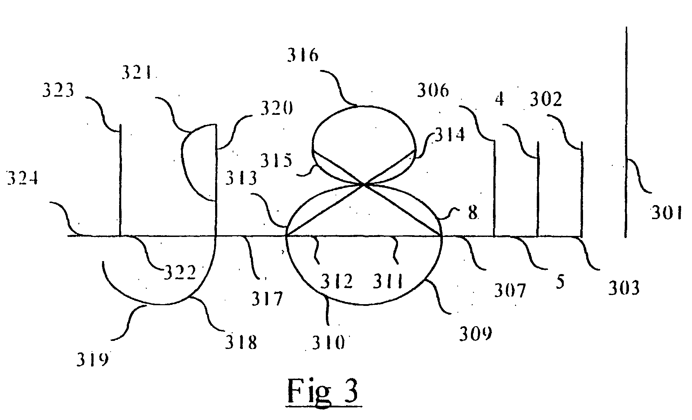

En figure 3, sont représentés des segments 301 à 324 qui forment conjointement un chemin sur lequel peut être tracé tout caractère arabe. Ces caractères sont formés selon les successions de segments ci-dessous (tableau 3) :

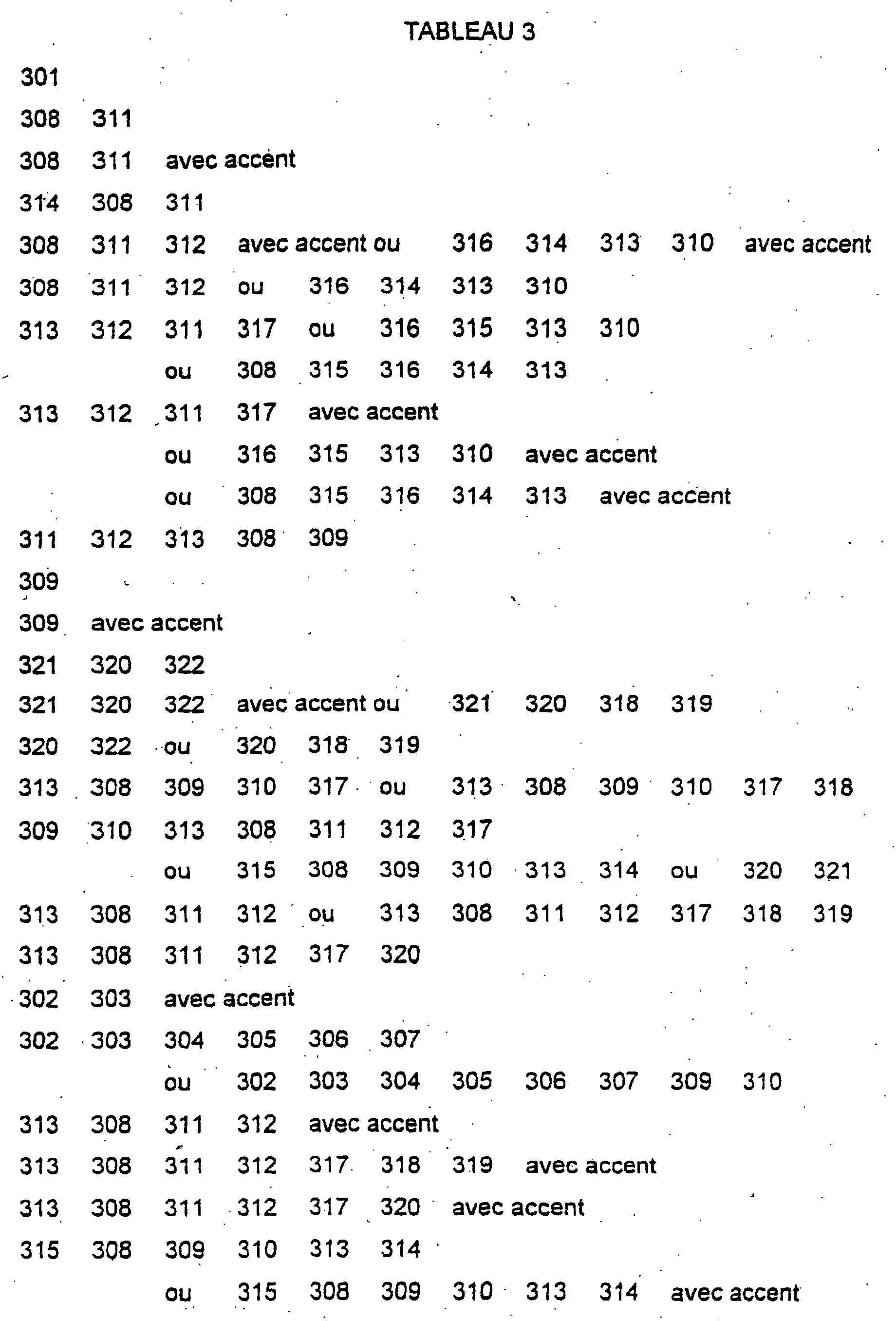

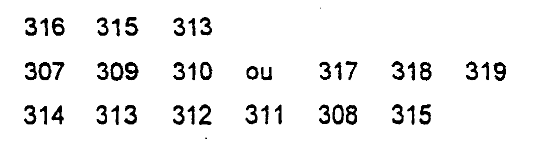

Bien que les formes des segments ne soient pas identiques, le mode de réalisation présenté en regard de la figure 3 fonctionne de la même manière que le mode de réalisation présenté en regard de la figure 2.

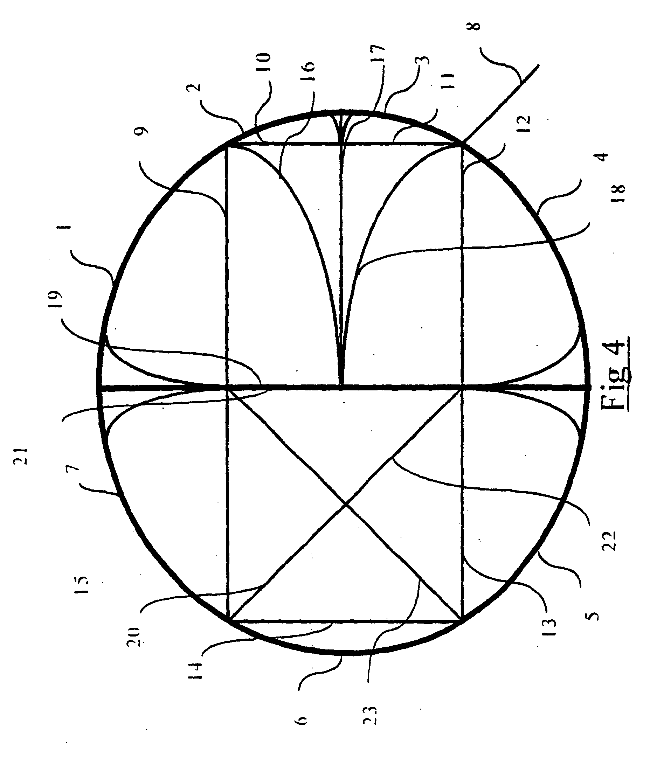

En figure 4 est représentée un autre chemin sur lequel peut être intuitivement tracé l'ensemble des caractères latins majuscules par exemple pour écrire en langues anglaise ou française. Ce chemin comporte 21 segments 1 à 21.

**TABLEAU 4**

| | | | | | | | | | | |
|---|---|---|---|---|---|---|---|---|---|---|
| A | 19 | 9 | 10 | 11 | 17 | | | | | |
| B | 19 | 1 | 16 | 18 | 4 | | | | | |
| C | 1 | 7 | 6 | 5 | 4 | | | | | |
| D | 19 | 1 | 2 | 3 | 4 | | | | | |
| E | 19 | 9 | 17 | 12 | | | | | | |
| F | 19 | 9 | 17 | | | | | | | |
| G | 7 | 6 | 5 | 4 | 3 | 17 | | | | |
| H | 19 | 10 | 11 | 17 | | | | | | |
| I | 19 | ou | 10 | 11 | | | | | | |
| J | 19 | 5 | ou | 10 | 11 | 12 | | | | |
| K | 19 | 16 | 18 | | | | | | | |
| L | 19 | 12 | | | | | | | | |
| M | 14 | 20 | 21 | 19 | | | | | | |
| N | 14 | 20 | 22 | 19 | | | | | | |
| O | 7 | 6 | 5 | 4 | 3 | 2 | 1 | | | |
| P | 19 | 1 | 16 | | | | | | | |
| Q | 7 | 6 | 5 | 4 | 3 | 2 | 1 | 8 | | |
| R | 19 | 1 | 16 | 18 | 8 | | | | | |
| S | 7 | 20 | 5 | | | | | | | |
| T | 19 | 15 | 9 | | | | | | | |
| U | 10 | 11 | 12 | 19 | ou | 19 | 13 | 14 | | |
| V | 20 | 21 | | | | | | | | |
| W | 14 | 23 | 22 | 19 | | | | | | |
| X | 20 | 22 | 21 | 23 | | | | | | |
| Y | 20 | 21 | 23 | | | | | | | |
| Z | 15 | 21 | 13 | | | | | | | |
| 0 | 9 | 19 | 12 | 11 | 10 | | | | | |
| 1 | 21 | 19 | | | | | | | | |
| 2 | 7 | 21 | 13 | 19 | | | | | | |
| 3 | 9 | 16 | 18 | 12 | ou | 1 | 16 | 18 | 4 | |
| 4 | 14 | 13 | 19 | | | | | | | |
| 5 | 9 | 19 | 18 | 4 | ou | 9 | 19 | 17 | 11 | 12 |
| 6 | 7 | 6 | 5 | 13 | | | | | | |
| 7 | 9 | 10 | 11 | | | | | | | |
| 8 | 7 | 20 | 5 | 23 | | | | | | |
| 9 | 19 | 16 | 1 | 10 | 11 | 4 | | | | |

On note que, dans l'exemple ci-dessus, tous les chiffres impairs sont placés à droite du segment 19 alors que tous les chiffres pairs sont placés à gauche de ce segment. Cette particularité permet au scripteur de choisir plus vite entre deux chemins ressemblant au chiffre qu'il souhaite tracer.

On note aussi qu'il n'est pas nécessaire de passer par tous les segments indiqués dans le tableau 4 pour saisir une lettre ou un chiffre, mais seulement par ceux qui sont conjointement caractéristiques du symbole saisi.

On observe aussi qu'il n'est pas nécessaire que les parties extrêmes du segment 19, qui prolongent sa partie centrale. ne sont pas nécessairement associées à un capteur.

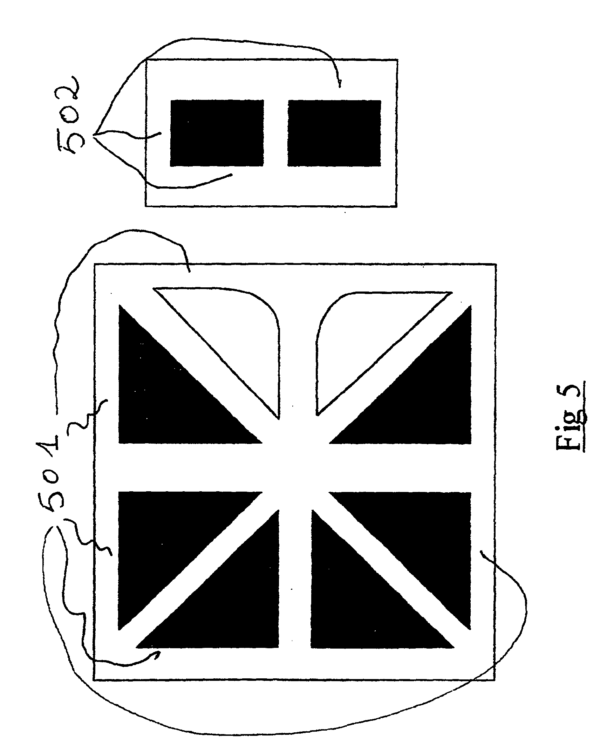

La figure 5 représente, dans un sixième mode de réalisation de la présente invention, adapté aux symboles alphanumériques, la forme d'un moyen de guidage 500 comportant deux moyens de guidage spécialisés 501 et 502, qui permettent à un scripteur de tracer :
- pour le moyen de guidage 501, comportant seize segments (chaque segment étant formé par un côté d'une des surfaces en relief, colorées en noir) possédant chacun au moins un capteur. les lettres majuscules et
- pour le moyen de guidage 502, comportant sept segments reliés chacun à au moins un capteur, les chiffres tels qu'ils sont représentés sur les afficheurs à sept segments, par exemple utilisés dans les calculatrices dont les chiffres sont affichés sur des diodes électroluminescentes,

Les moyens de guidage peuvent être matérialisés de différentes manières :
- de manière visible, par exemple en étant affichés sur un écran supportant un écran tactile,
- en relief, en dépassant au dessus des capteurs de sélection, ou
- en creux, leur contour étant en dessous de la surface du reste du moyen de saisie.

En figure 6, est représenté un circuit de traitement 607 associé à une des moyens de guidage représentés en figures 1 à 5, comportant-un ensemble de capteurs 601, et reliés entre eux par un bus informatique 602, une unité centrale 606, une mémoire morte ROM 605, une mémoire vive RAM 604, un port d'entrée 603 et un port de sortie 608. Cette architecture est connue de l'homme du métier des systèmes à microcontrôleur.

Les capteurs de l'ensemble de capteurs 601 sont positionnés sur les segments du chemins sur lequel des symboles à saisir peuvent être tracés. Dans le mode de réalisation décrit et réalisé, ces segments sont chacun dotés d'au moins un capteur qui émet un signal représentatif d'un appui sur sa surface. Cet ensemble de capteurs est, par exemple, constitué d'un écran tactile dont chaque point émet un signal indépendamment des autres points.

L'unité centrale 606 est, ici, constituée d'un microcontrôleur programmable. Le port d'entrée 603, de type connu, permet à l'unité centrale de capté les signaux émis par l'ensemble de capteur 601. La mémoire morte 603 conserve les instructions de programme nécessaires au fonctionnement de l'unité centrale 606. La mémoire vive 604 conserve les valeurs intermédiaires de traitement nécessaires au traitement des signaux entrant sur le port d'entrée pour fournir des signaux représentatifs de symbole sur le port de sortie 608.

La figure 7 représente un organigramme simplifié de fonctionnement du dispositif de traitement illustré en figure 6, en combinaison avec l'un des modes de réalisation de l'invention présentés en regard des figures 2 à 5.

Après l'initialisation 701, le test de saisie 702 de réception d'un signal sur le port d'entrée 603 est réalisé. Ce test 702 détermine si un signal représentatif de l'appui sur l'un des capteurs de l'ensemble de capteur 601 est reçu sur le port d'entrée 603, ou non. Lorsque le résultat du test 702 est négatif, ce test est réitéré. Lorsque le résultat du test 702 est positif, le test 703 détermine si le symbole associé au signal reçu est un symbole de fonction ou de contrôle. Si le résultat du test 703 est positif, au cours de l'opération 704, la fonction liée au symbole considérée est exécutée. Par exemple, si le signal correspond à un segment qui est associé à une touche d'effacement, la fonction suivante est réalisée :
- un signal représentatif de ladite fonction est émis sur le port de sortie 608,
- s'il y a un numéro dans un registre "*receivdata*" de mémoire vive 604, le dernier numéro stocké dans le registre *receivdata* est effacé de ce registre,
- s'il n'y a pas de numéro stocké dans le registre *receivdata.* le dernier symbole stocké dans un registre "*symbols*" de la mémoire vive 604, est effacé et
- le test 702 est réitéré.

L'opération 705, réalisée si le résultat du test 703 est négatif, consiste à ce que le numéro du segment associé au capteur qui a émis un signal soit stocké en mémoire vive RAM 304, dans le registre "*receivdata*". Puis le test 706 détermine si la séquence de numéros stockée dans le registre *receivdata* est caractéristique d'un symbole susceptible d'être saisi, par comparaison de ladite séquence ou de chacun des segments qui la constitue. avec des segments de séquences conservés en mémoire morte 605. On note ici que plusieurs segments de séquences de numéros peuvent être caractéristiques d'un symbole donné. Dans le mode de réalisation décrit et représenté, l'ordre des numéros dans chaque segment de séquence n'est pas considéré, c'est-à-dire que tous les segments de la séquence stockée dans *receivdata* sont considérés dans tous les ordres possibles et comparés aux segments de séquence conservés en mémoire morte 605.

Selon une variante, l'ordre de saisie de réception des numéros de segment dans le registre receivdata sert à distinguer les symboles saisis.

Si le résultat du test 706 est positif, au cours de l'opération 707 :
- le symbole considéré est stocké dans le registre *symbols* de la mémoire vive 604,
- un signal représentatif dudit symbole est émis sur le port de sortie 608,
- un signal de mise à disposition de symbole est émis sur ledit port de sortie 608 et
- le test 702 est réitéré.

Bien qu'il ne soient pas représentés les dispositifs suivants se combinent particulièrement bien aux modes de réalisation décrit et représentés ci-dessus :
- un téléviseur, aussi bien pour indiquer une chaîne souhaitée, que pour faire un choix proposé par un programme audiovisuel, par exemple de télé-achat ou de jeu ou que pour communiquer sur un réseau, par exemple INTERNET ou encore pour sélectionner un programme audiovisuel chargé à distance,
- une télécommande compacte qui permet de transmettre à distance de nombreux symboles,
- un organiseur compact permettant de mémoriser des messages complexes, écrits ou chiffrés,
- un écran tactile qui permet ainsi aussi bien le pointage, selon ses fonctions classiques, que la saisie de symboles,
- un ordinateur, en particulier miniaturisé,
- un téléphone qui, grâce au dispositif de saisie présenté ci-dessus. peut ainsi conserver des messages ou les transmettre sans que l'utilisateur n'est besoin de parler.
- un télécopieur qui peut saisir des messages saisis manuellement, sans qu'une impression ne soit nécessaire, ni la frappe sur un clavier de secrétariat de type connu,
- un pageur qui permet ainsi de noter des messages et, éventuellement de les émettre,
- une table dont le dispositif de saisie permet de passer une commande de repas dans un restaurant
- un dispositif de pointage ou une souris informatique qui permet ainsi, non seulement le pointage mais aussi la saisie de symboles,
- une montre dont le clavier, porté au recto ou au verso, permet la saisie de symboles,
- un clavier miniaturisé, par exemple de moins de un centimètre carré,
- un dispositif de traitement, de stockage, d'affichage, d'impression ou de communication d'information mettant en oeuvre le dispositif exposé ci-dessus pour saisir des données à traiter, à stocker, à afficher, à imprimer ou à communiquer, ou des paramètres de fonctionnement.

## Revendications

1. Dispositif de saisie manuelle de symboles, comportant:
- un moyen de guidage adapté à guider le scripteur vers au moins une partie caractéristique d'une forme géométrique représentative d'une écriture de certains symboles susceptibles d'être saisis, le moyen de guidage étant formé par un ensemble de segments de guidage (101-133, 201-225, 301-324, 1-23) formant un tracé comprenant des formes géométriques visibles représentatives d'une écriture de certains symboles susceptibles d'être saisis, les segments correspondant à des parties des dites formes géométriques,
- un moyen de sélection manuelle (601) des dits segments adapté à émettre un signal représentatif de la sélection manuelle de chaque segment opéré par le scripteur,
- un moyen de détermination (604-606) de symbole adapté à déterminer le symbole écrit par le scripteur en prenant en compte des signaux représentatifs de segments sélectionnés manuellement.

2. Dispositif selon la revendication 1 **caractérisé en ce que** certains segments (101-133) correspondent exclusivement à un symbole et sont situés sur une partie caractéristique du chemin d'une forme géométrique représentative d'une écriture du symbole auquel ils correspondent
et le moyen de détermination est adapté à déterminer ces symboles écrits par la sélection manuelle des segments auquel ils correspondent.

3. Dispositif selon la revendication 1 **caractérisé en ce que** le moyen de détermination est adapté à déterminer lesdits symboles écrits comme étant ceux dont les segments (201-225, 301-324, 1-23) sélectionnés manuellement sont conjointement caractéristiques d'une forme géométrique d'une écriture des dits symboles.

4. Procédé de saisie manuelle de symboles, comportant:
- une étape de guidage au cours de laquelle on guide le scripteur vers au moins une partie caractéristique d'une forme géométrique représentative d'une écriture de certains symboles susceptibles d'être saisis, utilisant un moyen de guidage formé par
un ensemble de segments de guidage (101-133, 201-225, 301-324, 1-23) formant un tracé comprenant des formes géométriques visibles représentatives d'une écriture de certains symboles susceptibles d'être saisis, les segments correspondent à des parties des dites formes géométriques,
- une étape de détection (702) d'une sélection manuelle de un ou plusieurs segments opérés par le scripteur,
- une étape de détermination (703-706) de symbole déterminant le symbole écrit par le scripteur en fonction des segments sélectionnés.

5. Procédé selon la revendication 4 **caractérisé en ce que** certains segments (101-133) correspondant exclusivement à un symbole et sont situées sur une partie caractéristique du chemin d'une forme géométrique représentative d'une écriture du symbole auquel ils correspondent
et dans l'étape de détermination ces symboles écrits sont déterminés par la sélection manuelle des segments auxquels ils correspondent.

6. Procédé selon la revendication 4 **caractérisé en ce que** dans l'étape de détermination lesdits symboles écrits sont déterminés comme étant ceux dont les segments sélectionnés (201-225, 301-324, 1-23) manuellement sont conjointement caractéristiques d'une forme géométrique d'une écriture des dits symboles.

7. Dispositif selon la revendication 2 ou procédé selon la revendication 7 **caractérisé en ce que**
chaque segment est constitué d'une touche de clavier ou d'un autre type de capteur optique, résistif, acoustique, capacitif ou de tout autre type de capteur ponctuel ou matriciel, ou **en ce que**
les segments sont affichés sur un écran tactile dont certaines zones, qui se superposent aux segment affichés sont associés aux symboles correspondant audits segments.

8. Dispositif selon la revendication 3 ou procédé selon la revendication 8 **caractérisé en ce que** chaque segment est constitué
d'un guidage en relief permettant de guider l'appui du doigt du scripteur ou d'une baguette, telle qu'un stylet, et
d'une zone sensible au contact du doigt ou du stylet, telle qu'une zone d'écran tactile.

9. Dispositif selon la revendication 3 ou procédé selon la revendication 8 **caractérisé en ce que** chaque segment est constitué
d'un tracé qui suit ou représente sa forme et qui guide visuellement l'appui du doigt du scripteur ou d'une baguette, telle qu'un stylet, et
d'une zone sensible au contact du doigt ou du stylet, telle qu'une zone d'écran tactile.

10. Téléviseur, télécommande, organiseur, écran tactile, ordinateur, téléphone, télécopieur, pageur, table, dispositif de pointage, souris informatique, montre, clavier, dispositif de traitement, dispositif de stockage, d'affichage, d'impression ou de communication d'information ayant un dispositif de saisie selon l'une quelconque des revendications 1 à 3 et 7 à 9 ou en ce qu'il met en oeuvre un procédé selon l'une quelconque des revendications 4 à 6 et 7 à 9.

## Patentansprüche

1. Möglichkeit der manuellen Syrnboleingabe, bestehend aus: Mechanismus, der dem Schreibenden hilft, dass seine Eingaben den geometrischen Formen bestimmter, vordefinierter Zeichen, die erkannt werden, ahnen. Eine Anzahl von Führungssegmenten (101- 133,201 - 225,301 - 324, 1- 23) Gehwahrleisten den beschriebenen Mechanismus. Sie bilden den Umriss der geometrischen Formen, die erkannt werden konnen. Bestimmte Segmente entsprechen bestirmsten T eilstücken der geometrischen Formen. Ein Mechanismus für die manuelle Selektion (601) der genannten Segmente, der für jedes durch den Stift aktivierte Segment ein eindeutiges Signal erzeugt Ein Symbolerkennungsmechanismus (604 -606), der die geschriebenen Zeichen erkennt und auch die manuell aktivierten Segmente berücksichtigt

2. Möglichkeut (gemss der Ansprüche 1), dass bestimmte Segmente (101 -133) genau einem Zeichen entsprechen. Diese Segmente befinden sich an Stellen, die charakteristisch sind für die geometrische Foren des Zeichens, dem sie entsprechen. Der Erkennungsmechanismus kann diese Zeichen erkennen, indem er auf den Selektionsmechanismus zurückgreift, der Angaben darüber liefert, welcher der charakteristischen Segmente aktiviert wurden.

3. Möglichkeit (gemäss der Ansprüche 1), dass der Erkennungsmechanismus auch die Zeichen erkennt, die sich auf mehrere charakteristische Segmente (201-225, 301- 324, 1- 23) verteilen, d.h. Zeichen, deren geometrische Form sich aus mehreren Segmenten zusammensetzt.

4. Die Prozedur, die manuelle Zeicheneingabe gewährleistet, besteht aus: - einer Führungsprozedur, die dem Schreibenden hilft, dass seine Zeichen wenigstens einem charakteristischen Teil der geometrischen Form eines auswertbaren Zeichens entsprechen. Diese Führungsprozedur bedient sich des Fürhngsmechanismus (aus 1), der gebildet wird aus Führungssegmenten (101-133,201 - 255,301 - 324, 1-23). Sie bilden den Umriss der geometrischen Formen, die erkannt werden können. Bestimmte Segmente entsprechen bestimmten Teilstücken der geometrischen Formen. - einer Entdeckungs-/ Detektierungsprozedur (702), die eine manuelle Auswahl einer oder mehrerer Segmente durch den Schreibenden erkennt. - einer Bestimmungsprozedur (703 - 706), die das geschriebene Zeichen bestimmt, indem es die aktivierten Segmente auswertet.

5. Prozedur gemäss der Ansprüche 4, d.h. dass bestimmte Segmente (101- 133) genau einem Zeichen zugeordnet sind. Diese Segmente befinden sich an Stellen, die charakteristisch sind für die geometrische Form des Zeichens, dem sie entsprechen. Um diese geschrieben Zeichen zu bestimmen, wertet die manuelle Selektion die Segmente aus, die den Zeichen entsprechen.

6. Prozedur gemäss der Ansprüche 4, d.h. dass in der Bestimmungsprozedur auch die Zeichen erkannt werden, deren geometrische formsiech auf mehrere zusammengehörige Charakteristische Segmente (201- 225,301- 324, 1- 23) verteilen.

7. Möglichkeit gemäss Ansprüche 2 oder gemäss Ansprüche 7, d.h. dass jedes Segment angesprochen werden kann mit einer Eingabetaste oder jeder anderen Art von optischer , resistiver, akustischer, kapazitiver Eingabeform oderjeder anderen Art von punktuellem (eindimensionalem) oder matricienem Eingabegerät. Die Segmente werden ferner auf einem Touchscreen angezeigt, bei dem bestimrnte Zonen, die sich mit den angezeigten Segmenten überlappen, bestimmten Zeichen zugeordnet sind.

8. Möglichkeit gemâss der Ansprüche 3 oder der Prozedur 8, d.h. dassjedes Segment gebildet wird aus einer hervorgehobenen Führung, die es erlaubt, den Finger des Schreibenden oder den Stift, zu führen. Weiterhin besteht jedes Segment aus einer berührungsempfindlichen Zone, die aufBerührung durch den Finger oder den Stift, reagiert. Diese Zone arbeitet wie ein Touchscreen.

9. Möglichkeit 9 gemäss der Ansprüche 3 oder gernass der Prozedur RUS Ansprüche 8, d.h. das jedes Segment eine Linie darstellen kann, die folgt oder die Form darstellt und die sichtbar den Finger oder den Stift des Schreibenden führt. Weiterhin besteht jedes Segment RUS einer berührungsempfindlichen Zone, die Rufberührung durch den Finger oder den Stift, reagiert. Diese Zone arbeitet wie ein Touchscreen.

10. Fernsehempfänger, Femebedienung, Organiseur, Touchscreen, Computer, Telefon, Faxgerät, Pager, Tisch, Zeigemöglichkeit, Maus, Uhr, Tastatur, Speicher-, Anzeige-, Druckmôglichkeiten sowie Kommunikation möglichkeiten sind geschützt gemäss der Ansprüche 1 bis 3 bzw.. 7 bis 9 oder gemäss eine der Prozeduren 4 bis 6 und 7 bis 9.

## Claims

1. A device of seizure of symbols made of:
- A device to guide the writer toward at least one part that has a shape typical of the writing of some sizeable symbols.
The guiding device being made of guiding segments (101 - 133, 201 - 225, 301 - 324, 1 - 23).
These "segment" constitute a circuit include visible geometrical shapes representative of the writing of some sizable symbols. These segments correspond to parts of the geometrical shapes mentioned earlier.
- A device of manual selection (601) of the aforementioned segments.
This device must be such as the emit a signal that is representative of the manual selection of each segment operated by the writer.
- A device that determines the symbols written by the writer, while taking into account signals that are representative of manually selected segments.

2. The device according to claim 1 such as certain "segments" (101 - 133) exclusively correspond to one symbol. These segments are located on an area that relates to a geometrical shape representative of the writing of the symbol to which they refer.
The determination device is such as to select these symbols written by the hand selection of the segments to which correspond.

3. A device in accordance with claim 1:
The determining technique is such as to determine the afore mentioned symbols.
These are transcribed as the one whose manually selected segments are typical of the geometrical shape of the writing of these symbols.

4. A technique of manual seizure of symbols this includes:
- A stage during which the writer is directed toward at least one part whose geometrical shape is representative of the writing of some sizeable symbols.
The guiding device used in this process is made up of:
- A set of guiding segments that constitute a circuit. The latter includes visible geometrical shapes that are typical of the transcription of some sizable symbols. The segments correspond to parts of the geometrical shapes in question.
- A detection stage for the manual selection of one or many segments operated by the writer.
Another stage to determine the symbol written by the writer in function of the selected segments.

5. A technique that relates to claim 4 such that certain segments correspond exclusively to one symbols. These are located on an area traversed by a path whose shape is representative of the writing of the symbol to which they correspond, at this stage determination these written symbols are determined by the manual selection of the segments to which they correspond.

6. A technique relating to claim 4 so that in stage 3 (determination ) the written symbols are determined as being those whose manually selected segments are at a time representative of a geometrical shape of the writing at of these symbol.

7. A device claim 2 or technique 7 such that:
Each segment is made up of a key or of another sort of optical sensor, resistant, acoustic, capacitive or any other sort of punctual matrix-sensor, such that:
The segments show on a sensitive screen part of which are superposed to the segments Show, and are associated with the symbols corresponding to these segments.

8. A device according a claim 3 or a technique (according to claim 8) such that each segment is made up of:
A salient guiding device that makes it possible to guide the writer finger or of stick, such as a stylus, and of a zone sensitive at the contact of a finger/ stylus such as the sensitive spot of a screen.

9. A device according to claim 3 / technique according to claim 8 such that each segment made up of a circuit that follows / represents its own shape. It visually guides the writer's fulcrum (point of support) and of a sensitive area at the touch of a finger / stylus such as a sensitive screen

10. televiewver, telecontroller, organizer, tactile screen, computer, telephone, telecopier, pager, table, pointing device, computer mouse, timer (watch), keyboard, printing or communicating information **characterized in that** it comprises an acquisition device in accordance with any of claim 1 - 3, and 7 - 9, or **in that** it puts effect a technique that relates to any of claims 4 - 6 , 7 - 9.
